# EUROPEAN PATENT APPLICATION

(11) **EP 4 806 753 A1**
(43) Date of publication of application: **16.09.2026**
(21) Application number: 25853840.4
(22) Date of filing: 13.08.2025
(51) Int. Cl.: B60W 60/00, B60W 50/00

(54) **SPARSE SAMPLING-BASED SPATIO-TEMPORAL JOINT TRAJECTORY PLANNING METHOD AND DEVICE**

(30) Priority: 13.08.2024 CN 202411108892
(71) Applicant: Chery Automobile Co., Ltd., Wuhu, Anhui 241006 (CN)
(72) Inventor: LI, Penglong, Wuhu, Anhui 241006 (CN); GAO, Jiabing, Wuhu, Anhui 241006 (CN); ZHAO, Wanzhong, Wuhu, Anhui 241006 (CN); ZHANG, Xiaohong, Wuhu, Anhui 241006 (CN); CHEN, Changhong, Wuhu, Anhui 241006 (CN)
(74) Representative: Adamson Jones
(86) International application number: PCT/CN2025/114476
(87) International publication number: WO 2026/037346

(57) **Abstract**

A sparse sampling-based spatio-temporal joint trajectory planning method and device. The method comprises: acquiring state information of an ego vehicle and state information of a dynamic/static obstacle surrounding the ego vehicle (S1); acquiring a spatio-temporal joint map on the basis of the state information of the ego vehicle and surrounding environment information of the ego vehicle (S2); on the basis of the longitudinal acceleration in the state information of the ego vehicle and the spatio-temporal joint map, performing sparse sampling on coarse-grained trajectory points of the ego vehicle to obtain a coarse-grained trajectory point set of the ego vehicle (S3); determining an optimal coarse-grained trajectory on the basis of the coarse-grained trajectory point set of the ego vehicle (S4); determining a three-dimensional convex space on the basis of the optimal coarse-grained trajectory and the spatio-temporal joint map (S5); and generating a Bezier fine-grained trajectory in the three-dimensional convex space according to the convex hull property of a Bezier curve (S6).

## Description

This application is based upon and claims priority to Chinese Patent Application No. 202411108892.7, filed on August 13, 2024 and entitled "METHOD AND APPARATUS FOR SPATIO-TEMPORAL JOINT TRAJECTORY PLANNING BASED ON SPARSE SAMPLING," the entire contents of which are incorporated herein by reference.

### TECHNICAL FIELD

The present disclosure relates to the field of assisted driving technologies, and in particular, relates to a method and an apparatus for spatio-temporal joint trajectory planning based on sparse sampling.

### BACKGROUND

As one of the key technologies in autonomous driving, trajectory planning is mainly categorized into two types: spatio-temporal decoupled planning and spatio-temporal joint planning. Spatio-temporal decoupled planning decomposes a spatio-temporal trajectory into a path and a speed profile, reducing the difficulty of the problem-solving process by separately solving for the path and the speed. However, this approach sacrifices the optimality of the resulting trajectory to an extent and is prone to getting trapped in a sub-optimal trajectory in complex dynamic scenarios. Spatio-temporal joint planning for autonomous driving does not decompose a trajectory into a path and a speed profile but directly solves for an optimal spatio-temporal trajectory. Therefore, a higher-quality trajectory may be obtained, but the computational efficiency may be consequently reduced. Currently, most trajectory generation schemes adopt a dense sampling method to obtain trajectory points, such as the rapidly-exploring random tree (RRT) algorithm. Although this algorithm may quickly and effectively search for a path in space, the algorithm lacks supervision in the process of generating new nodes, resulting in a slow convergence speed. Furthermore, the dense sampling method often involves a high computational load during acquisition of a fine-grained trajectory.

In summary, the efficiency of spatio-temporal decoupled planning based on dense sampling is low when generating a fine-grained trajectory; and the spatio-temporal decoupled planning involves a high computational load and is prone to getting trapped in sub-optimal trajectory solutions. Therefore, there is a need to comprehensively consider the complexity and real-time performance of trajectory planning, as well as the optimality of the trajectory under the constraints of complex configuration-space obstacles and dynamic conditions, to achieve the generation of a high-quality, safe, feasible, and optimal fine-grained trajectory.

### SUMMARY

Accordingly, the present disclosure provides a method and apparatus for spatio-temporal joint trajectory planning based on sparse sampling, which fully consider the optimality of a trajectory under the constraints of complex configuration-space obstacles and dynamic conditions, to improve computational efficiency and trajectory quality, and to ensure the safety and feasibility of the trajectory. The technical solutions are as follows:

Some embodiments of the present disclosure provide a method for spatio-temporal joint trajectory planning based on sparse sampling. The method is performed by an electronic device, and includes:
acquiring state information of an ego vehicle and state information of dynamic and static obstacles around the ego vehicle;
obtaining a spatio-temporal joint map based on the state information of the ego vehicle and surrounding environment information of the ego vehicle;
obtaining a set of coarse-grained trajectory points for the ego vehicle by sparsely sampling coarse-grained trajectory points for the ego vehicle based on a longitudinal acceleration in the state information of the ego vehicle and according to the spatio-temporal joint map;
determining an optimal coarse-grained trajectory based on the set of coarse-grained trajectory points for the ego vehicle;
determining a three-dimensional (3D) convex space based on the optimal coarse-grained trajectory and the spatio-temporal joint map; and
generating a Bézier fine-grained trajectory in the 3D convex space by using a convex hull property of a Bézier curve.

In some embodiments, sparsely sampling the coarse-grained trajectory points for the ego vehicle includes: sampling the longitudinal acceleration of the ego vehicle, and obtaining longitudinal coarse-grained sampled trajectory points for the ego vehicle based on the sampled acceleration; and
forming the set of coarse-grained trajectory points for the ego vehicle by sampling, according to the spatio-temporal joint map, trajectory points satisfying a lane-keeping condition and trajectory points satisfying a lane-changing requirement from the longitudinal coarse-grained sampled trajectory points for the ego vehicle.

In some embodiments, the acceleration of the ego vehicle is sampled at a predetermined resolution within a predetermined acceleration interval.

In some embodiments, determining the optimal coarse-grained trajectory includes: obtaining a set of coarse-grained trajectories by connecting different sample points between each two adjacent time layers in the set of coarse-grained trajectory points for the ego vehicle; and
calculating a cost for each coarse-grained trajectory in the set of coarse-grained trajectories, and selecting the coarse-grained trajectory with a minimum cost as the optimal coarse-grained trajectory, wherein the cost of the each coarse-grained trajectory comprises an obstacle cost, a reference line deviation cost, and a lateral velocity cost.

In some embodiments, determining the 3D convex space includes: obtaining the 3D convex space by expanding the convex space in longitudinal and lateral directions starting from points of the optimal coarse-grained trajectory until a drivable boundary is reached; wherein the drivable boundary comprises a longitudinal drivable boundary and a lateral drivable boundary, wherein the longitudinal drivable boundary is determined based on a preceding sampled acceleration and a succeeding sampled acceleration relative to the optimal coarse-grained trajectory, and the lateral drivable boundary is determined based on an allowable maximum lateral offset of the optimal coarse-grained trajectory.

In some embodiments, generating the Bézier fine-grained trajectory includes: determining the Bézier fine-grained trajectory according to an optimized trajectory model, with minimizing a cost of the trajectory as an objective, and subject to terminal constraints, continuity constraints, collision constraints, and dynamic constraints; wherein the optimized trajectory model is constructed using n Bézier curves, and the cost of the trajectory is determined by an integral of a square of a *jerk* value of the trajectory with respect to time.

Some embodiments of the present disclosure provide an apparatus for spatio-temporal joint trajectory planning based on sparse sampling. The apparatus includes:
an acquiring module, configured to acquire state information of an ego vehicle and state information of dynamic and static obstacles around the ego vehicle; and
a trajectory planning module, configured to: obtain a spatio-temporal joint map based on the state information of the ego vehicle and surrounding environment information of the ego vehicle; obtain a set of coarse-grained trajectory points for the ego vehicle by sparsely sampling coarse-grained trajectory points for the ego vehicle based on a longitudinal acceleration in the state information of the ego vehicle and according to the spatio-temporal joint map; determine an optimal coarse-grained trajectory based on the set of coarse-grained trajectory points for the ego vehicle; determine a 3D convex space based on the optimal coarse-grained trajectory and the spatio-temporal joint map; and generate a Bézier fine-grained trajectory in the 3D convex space by using a convex hull property of a Bézier curve.

Some embodiments of the present disclosure provide a control device. The control device includes: one or more processors and one or more memories, the one or more memories storing at least one program code, wherein the one or more processors are configured to load and execute the at least one program code to perform the method for spatio-temporal joint trajectory planning based on sparse sampling as described above.

Some embodiments of the present disclosure provide a computer-readable storage medium. The computer-readable storage medium stores at least one program code thereon, wherein the at least one program code, when loaded and executed by a processor, causes the processor to perform the method for spatio-temporal joint trajectory planning based on sparse sampling as described above.

Some embodiments of the present disclosure provide a computer program product. The computer program product includes computer program code, wherein the computer program code is stored in a computer-readable storage medium, and the computer program code, when read and executed by a processor of a control device, is caused to perform the method for spatio-temporal joint trajectory planning based on sparse sampling as described above.

The technical solutions according to embodiments of the present disclosure achieve at least the following beneficial effects:
The embodiments of the present disclosure provide a method for spatio-temporal joint trajectory planning based on sparse sampling. In this method, coarse-grained trajectory points for an ego vehicle are sparsely sampled based on longitudinal acceleration, and an optimal coarse-grained trajectory is obtained by searching for the sampled points using a dynamic programming method. A station-lateral-time (SLT) 3D convex space is constructed according to a spatio-temporal joint map, such that spatial obstacles with complex configurations are taken into consideration. A Bézier fine-grained trajectory is then generated in the 3D convex space by using the convex hull property of a Bézier curve. This approach fully considers complex configuration-space obstacles and dynamic constraints, improves computational efficiency, and ensures the safety and feasibility of the trajectory.

### BRIEF DESCRIPTION OF DRAWINGS

For clearer descriptions of technical solutions according to the embodiments of the present disclosure, drawings that are to be referred for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a flowchart of a method for spatio-temporal joint trajectory planning based on sparse sampling according to some embodiments of the present disclosure;
FIG. 2 is a schematic diagram illustrating sparse sampling of longitudinal acceleration according to some embodiments of the present disclosure; and
FIG. 3 is a schematic diagram illustrating the construction of a spatio-temporal joint convex space according to some embodiments of the present disclosure.

### DETAILED DESCRIPTION

For clearer descriptions of the objectives, technical solutions, and advantages of the present disclosure, embodiments of the present disclosure are described hereinafter in detail with reference to the accompanying drawings.

Before detailed interpretation and description of embodiments of the present disclosure, application scenarios and system architecture of some embodiments of the present disclosure are introduced first.

Firstly, the system architecture involved in the embodiments of the present disclosure is described.

A system related to the method for spatio-temporal joint trajectory planning based on sparse sampling according to some embodiments of the present disclosure includes on-board sensors and an intelligent driving controller.

The on-board sensors are configured to acquire information required for trajectory planning, including state information of an ego vehicle and state information of dynamic and static obstacles around the ego vehicle. The state information for each entity includes position, velocity, acceleration, and the like.

The intelligent driving controller is configured to obtain a planned trajectory by performing trajectory planning based on the information required for trajectory planning acquired by the on-board sensors.

A person skilled in the art should understand that the above system architecture is for illustrative purposes only. Other existing or future components or modules, if applicable to the present disclosure, should also be included within the scope of protection of the present disclosure and are incorporated herein by reference.

Next, the application scenario of the method according to the embodiments of the present disclosure is described.

The method according to the embodiments of the present disclosure is applied in an autonomous driving scenario. Currently, spatio-temporal joint planning for autonomous driving does not decompose a trajectory into a path and a speed profile but directly solves for an optimal spatio-temporal trajectory. Therefore, a higher-quality trajectory may be obtained, but the computational efficiency may be consequently reduced. Most current trajectory generation schemes adopt a dense sampling method to acquire trajectory points, such as the RRT algorithm. Although this algorithm may quickly and effectively search for a path in space, the algorithm lacks supervision in the process of generating new nodes, resulting in a slow convergence speed. Furthermore, the dense sampling method often involves a high computational load during acquisition of a fine-grained trajectory.

Based on such an application scenario, some embodiments of the present disclosure provide a method for spatio-temporal joint trajectory planning based on sparse sampling.

For clearer understanding of the objectives, technical solutions, and advantages of the present disclosure, some embodiments of the present disclosure are further described in detail below with reference to the accompanying drawings.

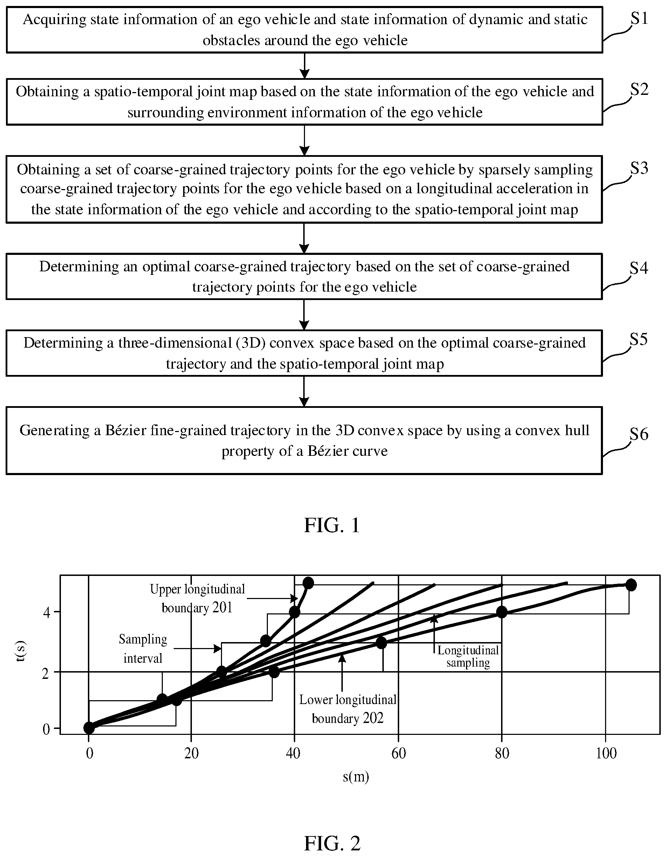

FIG. 1 illustrates a flowchart of a method for spatio-temporal joint trajectory planning based on sparse sampling according to the present application. The method may be performed by an on-board device of a vehicle. The on-board device includes on-board sensors and an intelligent driving controller. Referring to FIG. 1, the method includes the following steps.

In step (S1), state information of an ego vehicle and state information of dynamic and static obstacles around the ego vehicle are acquired.

During acquisition of the state information of the ego vehicle, real-time position (latitude and longitude, lateral offset within a lane), instantaneous velocity (longitudinal velocity, lateral velocity), acceleration (longitudinal acceleration, lateral acceleration), heading angle, and the like of the ego vehicle may be collected in real-time through the on-board sensors. With respect to acquisition of the state information of the dynamic and static obstacles around the ego vehicle, the static obstacles include road boundaries (guardrails, curbs), traffic signs (stop lines, no-overtaking zones), fixed buildings, and the like; and the dynamic obstacles include other vehicles (position, velocity, acceleration, driving direction), pedestrians, non-motorized vehicles, and the like. Multi-source data is subjected to noise reduction and calibration using sensor fusion technology, thereby ensuring data accuracy. Meanwhile, short-term prediction of future motion trajectories of the dynamic obstacles is performed (e.g., based on a constant velocity model or an interactive perception model), which provides obstacle information in a time dimension for subsequent construction of a spatio-temporal joint map.

In step (S2), a spatio-temporal joint map is obtained based on the state information of the ego vehicle and surrounding environment information of the ego vehicle.

The information of the ego vehicle and the obstacles is transformed into a Frenet coordinate system (with a road centerline as a reference line, s as a longitudinal distance along the reference line, and 1 as a lateral offset), which may simplify geometric description of path planning. Construction of the spatio-temporal joint map needs to incorporate a time axis to form a three-dimensional (s, 1, t) space, wherein position information of the dynamic obstacles dynamically updates with time t (e.g., predicting s-1 coordinates of a preceding vehicle at t=1s and t=2s), while the static obstacles maintain fixed s-1 coordinates throughout an entire planning cycle. The map also needs to be annotated with boundaries of a drivable area (e.g., lane lines, no-entry zones), thereby providing a constraint range for subsequent sampling of trajectory points.

In step (S3), a set of coarse-grained trajectory points for the ego vehicle is obtained by sparsely sampling coarse-grained trajectory points for the ego vehicle based on a longitudinal acceleration in the state information of the ego vehicle and according to the spatio-temporal joint map.

During longitudinal acceleration sampling, an initial sampling interval is set according to vehicle performance parameters, and a resolution is dynamically adjusted according to driving scenarios (for example, the resolution is decreased in high-speed scenarios to reduce calculation amount, and the resolution is increased in low-speed congestion scenarios to ensure flexibility). During screening of lateral sampled points, lane line positions in the spatio-temporal joint map need to be considered: for a lane-keeping scenario, 1-coordinates of the sampled points need to fall within a width range of a current lane; and for a lane-changing scenario, the sampled points need to cover a target lane, and ensure that a lateral displacement is completed within the planning cycle. Trajectory points that conflict with the obstacles need to be eliminated after sampling.

In step (S4), an optimal coarse-grained trajectory is determined based on the set of coarse-grained trajectory points for the ego vehicle.

During connection of the sampled points of adjacent time layers, linear interpolation is adopted to generate coarse-grained trajectory segments, ensuring continuity of the trajectory in the time dimension. During calculation of a trajectory cost, an obstacle cost needs to be weighted according to obstacle types (e.g., a weight of pedestrians is higher than that of static guardrails); a reference line deviation cost needs to be combined with road curvature (the tolerance for deviation is lower in curve scenarios); and a lateral velocity cost needs to be limited within a comfortable range (e.g., lateral acceleration ≤ 2m/s²). During searching for the optimal coarse-grained trajectory via dynamic programming, minimum cost paths for each sampled point are stored by "archiving," and traced back reversely from a terminal point during "looking up the archive." This ensures that a global optimal solution is found to avoid unreasonable trajectories (such as excessive deviation or sharp steering) caused by local optimums.

In step (S5), a 3D convex space is determined based on the optimal coarse-grained trajectory and the spatio-temporal joint map.

The expansion process of the 3D convex space needs to be performed by time layers. With points of the optimal coarse-grained trajectory as centers, when expanding longitudinally forwards and backwards, reference is made to sampled acceleration ranges of preceding and succeeding time layers to ensure that longitudinal motion complies with vehicle dynamic constraints; when expanding laterally leftwards and rightwards, reference is made to a drivable road width (e.g., remaining width of the current lane, whether adjacent lanes can be borrowed) and lateral boundaries of the obstacles (e.g., when there is a guardrail on the left, a left boundary of the 1-axis is the guardrail position), and an expansion stopping condition is touching an obstacle boundary or reaching an allowable maximum lateral offset. The finally formed 3D convex space needs to cover areas through which all safe and feasible fine-grained trajectories may pass.

In step (S6), a Bézier fine-grained trajectory is generated in the 3D convex space by using a convex hull property of a Bézier curve.

The order of the Bézier curve is selected according to a size of the convex space, and initial values of control points are set based on the points of the optimal coarse-grained trajectory. During the optimization process, terminal constraints ensure that the head and tail of the fine-grained trajectory completely coincide with those of the coarse-grained trajectory (consistent position, velocity, and acceleration); continuity constraints require that first-order derivatives (velocity) and second-order derivatives (acceleration) of adjacent Bézier curve segments at a connection point are equal, avoiding abrupt trajectory changes. Collision constraints are implemented by checking whether the convex hull of the Bézier curve is completely located within the 3D convex space (in a case where vertices of the convex hull do not exceed spatial boundaries, the trajectory has no collision risk). Dynamic constraints need to limit the longitudinal acceleration, lateral acceleration, and steering angle. Finally, optimal control points are quickly obtained by a quadratic programming solver, and the fine-grained trajectory satisfying all constraints is generated.

The method for spatio-temporal joint trajectory planning based on sparse sampling according to the embodiments of the present disclosure performs sparse sampling on the coarse-grained trajectory points for the ego vehicle based on the longitudinal acceleration, obtains the optional coarse-grained trajectory by searching for the sampled points using a dynamic programming method, constructs the SLT 3D convex space according to the spatio-temporal joint map, fully considers obstacles in complex configuration spaces and the dynamic constraints, and implements generation of the optimized Bézier fine-grained trajectory using the convex hull property of the Bézier curve, thereby improving computational efficiency and ensuring safety and feasibility of the trajectory.

In step (S1), the state information of the ego vehicle and the state information of the dynamic and static obstacles around the ego vehicle are acquired using the on-board sensors, wherein each state information includes position, velocity, acceleration, and the like. The obstacles are objects that constrain behaviors of the vehicle, including road geometric information, guardrails, or trees at the road boundaries.

In step (S2), the state information of the ego vehicle and the surrounding environment information of the ego vehicle acquired in step (S1) are transformed into Frenet coordinates and expanded on the time axis to obtain the spatio-temporal joint map by real-time construction.

The spatio-temporal joint map *M* within a time period *T* consists of three parts, including positions ${\sum }_{n = 1}^{{N}_{D}} {P}_{t , n}^{D}$ of vehicles around the ego vehicle, positions ${\sum }_{n = 1}^{{N}_{S}} {P}_{t , n}^{S}$ of the static obstacles, and the road geometric information ${\sum }_{n = 1}^{{N}_{L}} {P}_{t , n}^{L}$*.* For representation of the spatio-temporal joint map M, reference may be made to Formula 1 hereinafter: $\left\{\begin{matrix}M = \left\{{\sum }_{t = {t}_{0}}^{T} {\sum }_{n = 1}^{{N}_{D}} {P}_{t , n}^{D}\right\} ∪ \left\{{\sum }_{t = {t}_{0}}^{T} {\sum }_{n = 1}^{{N}_{S}} {P}_{t , n}^{S}\right\} ∪ \left\{{\sum }_{t = {t}_{0}}^{T} {\sum }_{n = 1}^{{N}_{L}} {P}_{t , n}^{L}\right\} \\ {P}_{t , n}^{D} = \left[{s}_{t , n}, {l}_{t , n}\right] \\ {P}_{t , n}^{S} = \left[{s}_{t , n}, {l}_{t , n}\right] \\ {P}_{t , n}^{L} = \left[{L}_{{w}_{t , n}}, {L}_{{id}_{t , n}}, {n}_{{s}_{t , n}}, {n}_{{l}_{t , n}}\right]\end{matrix}\right.$

In this formula, *N_{D}, N_{S},* and *N_{L}* represent the numbers of surrounding vehicles, static obstacles, and lanes respectively; [*s_{t,n}, l_{t,n}*] represents s and l coordinates in the Frenet coordinate system; [*L_{wt,n},L_{idt,n}*] represents the width and serial number of the lane respectively; and [*n_{st,n}, n_{lt,n}*] represents coordinates of the lane centerline in the Frenet coordinate system.

In step (S3), the sparse sampling performed on the coarse-grained trajectory points for the ego vehicle includes longitudinal sparse sampling and lateral sparse sampling. Specific steps are as follows.

In step (S31), the longitudinal acceleration of the ego vehicle is sampled, and longitudinal coarse-grained sampled trajectory points for the ego vehicle are obtained based on the sampled acceleration.

In some embodiments, the acceleration of the ego vehicle is sampled at a predetermined resolution within a predetermined acceleration interval.

The acceleration *aₛ* of the vehicle in an axis direction is sampled at a resolution *δₐ* within an interval [*aminₘₐₓ*] to obtain an acceleration set, while the planning cycle *[0, tₘₐₓ*] is sampled at a resolution *δₜ* to obtain a planning time set. Assuming that the vehicle undergoes uniform acceleration or uniform deceleration movement within a short time, the set of longitudinal coarse-grained sampled trajectory points *ST* for the ego vehicle corresponding to each acceleration sampled point *aₛ* is obtained. For details, reference may be made to Formula 2 hereinafter: $\left\{\begin{matrix}A = \left\{{a}_{min},{a}_{min}+{δ}_{a},…,{a}_{max}\right\} \\ T = \left\{0,{δ}_{t},2{δ}_{t},⋯,{t}_{max}\right\} \\ ST = \left\{\left(s, t\right)\left|s={s}_{0}+{v}_{{s}_{0}}t+\frac{{a}_{s} {t}^{2}}{2},t∈T\right.\right\} , {a}_{s} ∈ A\end{matrix}\right.$

In this formula, *aₘᵢₙ* and *aₘₐₓ* represent a maximum deceleration and a maximum acceleration respectively; *tₘₐₓ* represents a time period for a single trajectory planning; *s*₀ represents an s-coordinate in the Frenet coordinate system at an initial moment; and *v*_{*s*0} represents an s-direction velocity at the initial moment.

As illustrated in FIG. 2, which illustrates a sampling interval and a distribution rule of sampled points of longitudinal acceleration in the present disclosure, a vertical axis in the figure represents the longitudinal acceleration, and a horizontal axis represents planning time, wherein an upper longitudinal boundary 201 and a lower longitudinal boundary 202 correspond to a maximum acceleration and a maximum deceleration of the vehicle respectively, forming a physically feasible interval of the acceleration. Discrete points within the sampling interval are acceleration values obtained by sampling according to a set resolution, and each sampled point corresponds to a longitudinal motion state of a time layer. By the sparse sampling, under the premise of ensuring coverage of all possible longitudinal motions of the vehicle, a large number of invalid sampled points are reduced compared to dense sampling (such as random sampling of the RRT algorithm), thereby significantly reducing calculation amount for subsequent trajectory search. Meanwhile, a distribution density of the sampled points may be dynamically adjusted according to actual scenarios. For example, in a high-speed cruising scenario, a sampling resolution is decreased to reduce the number of points; and in a low-speed following scenario, the sampling resolution is increased to ensure trajectory fineness, thereby achieving a balance between efficiency and accuracy.

The method according to the embodiments of the present disclosure performs sampling according to the resolution within the predetermined acceleration interval, which may prevent the sampled points from exceeding physical performance limits of the vehicle (e.g., the acceleration exceeding capability of a power system), thereby ensuring basic feasibility of the generated coarse-grained trajectory. Flexible setting of the resolution (e.g., dynamic adjustment based on scenarios) may balance computational efficiency and trajectory fineness-a low resolution in high-speed scenarios reduces the number of points, and a high resolution in low-speed scenarios ensures response speed, thereby solving problems of redundancy at high speeds and insufficiency at low speeds under a fixed sampling rate.

In step (S32), the set of coarse-grained trajectory points for the ego vehicle is formed by sampling, according to the spatio-temporal joint map, trajectory points satisfying a lane-keeping condition and trajectory points satisfying a lane-changing requirement from the longitudinal coarse-grained sampled trajectory points for the ego vehicle.

A process of sampling the trajectory points satisfying the lane-keeping condition is as follows: taking a centerline of a current lane as a reference line, a sampling interval in an axis direction corresponding to each sampled point *(s, t)* is [*-Δlₘₐₓ, Δlₘₐₓ*]*.* The sampling interval *δₗₖ* is equidistantly discretized with a sampling interval to obtain a lateral sampled point set *Lₖ*. For a set of trajectory points *SLTₖ* satisfying the lane-keeping condition corresponding to each acceleration sampled point, reference may be made to Formula 3 hereinafter: $\left\{\begin{matrix}{L}_{k} = \left\{-{Δl}_{max},-{Δl}_{max}+{δ}_{a},…,{Δl}_{max}\right\} \\ {Δl}_{max} = {f}_{Δ} {v}_{s} \\ {SLT}_{k} = \left\{\left(s, l, t\right)\left|s={s}_{0}+{v}_{{s}_{0}}t+\frac{{a}_{s} {t}^{2}}{2},t∈T,l∈{L}_{k}\right.\right\} , {a}_{s} ∈ A\end{matrix}\right.$

In this formula, *Δlₘₐₓ* represents a maximum allowable displacement of an intelligent vehicle in the axis direction, and *f_{Δ}* represents an undetermined constant.

A process of sampling the trajectory points satisfying the lane-changing requirement is as follows: taking a centerline of a target lane as a reference line, a sampling interval in the axis direction corresponding to each sampled point (*s, t*) is [*l_{ego},* 0], that is, a region from a lateral distance *l_{ego}* of a current position of the vehicle to the reference line of the target lane, *l_{ego}* is negative when the vehicle is located on the left side of the reference line, and *l_{ego}* is positive when the vehicle is located on the right side of the reference line. In order to ensure that the vehicle completes lane changing within a planning cycle, a sampled point of a last time layer is set on the reference line. The sampling interval is equidistantly discretized with the sampling interval *δ_{lc}* to obtain a lateral sampled point set *L_{c},* and a set of trajectory points satisfying the lane-changing requirement is *SLT_{c}.* For details, reference may be made to Formula 4 hereinafter: $\left\{\begin{matrix}{L}_{c} = \left\{{l}_{ego},{l}_{ego}+{δ}_{lc},⋯,0\right\} \\ {SLT}_{c} = \left\{\left(s, l, t\right)\left|s={s}_{0}+{v}_{{s}_{0}}t+\frac{{a}_{s} {t}^{2}}{2},t∈T,l∈{L}_{c}\right.\right\} , {a}_{s} ∈ A\end{matrix}\right.$

The method according to the embodiments of the present disclosure implements a sparse sampling logic of "longitudinal priority, lateral adaptation" by first sampling the longitudinal acceleration to obtain longitudinal trajectory points, and then combining the spatio-temporal joint map to screen the lane-keeping and lane-changing trajectory points. Compared to indiscriminate sampling, this manner reduces a large number of invalid sampled points (such as points exceeding a lane range or conflicting with obstacles). While ensuring coverage of all feasible driving behaviors (keeping/changing lanes), the calculation amount of the subsequent trajectory search is significantly reduced. Meanwhile, endpoints of the lane-changing trajectory points are forced to align with the centerline of the target lane, ensuring completeness and safety of a lane-changing behavior.

In step (S4), a set of coarse-grained trajectories is obtained by connecting different sample points between each two adjacent time layers in the set of coarse-grained trajectory points for the ego vehicle; and a cost for each coarse-grained trajectory in the set of coarse-grained trajectories is calculated, and the coarse-grained trajectory with a minimum cost is selected as the optimal coarse-grained trajectory, wherein the cost of the each coarse-grained trajectory includes an obstacle cost, a reference line deviation cost, and a lateral velocity cost.

In some embodiments, in an *SLT* sampled point set corresponding to each acceleration sampled point *aₛ,* different sampled points between each two adjacent time layers are connected using a linear line segment to obtain a coarse-grained trajectory set between adjacent time layers. The cost of each coarse-grained trajectory in the set of coarse-grained trajectories is calculated using a coarse-grained trajectory cost function.

Constructing the coarse-grained trajectory cost function and searching for the optimal coarse-grained trajectory includes the following steps.

In step (S41), the coarse-grained trajectory cost function is constructed, wherein a cost ${C}_{{n}_{t}^{i} \to {n}_{t + {δ}_{t}}^{j}}$ on a connected trajectory formed by an *i*^{th} sampled point ${n}_{t}^{i}$ in a time layer *Lₜ* and a *j*^{th} sampled point ${n}_{t + {δ}_{t}}^{j}$ in a time layer ${L}_{t + {δ}_{t}}$ includes the obstacle cost *C_{obs},* the reference line deviation cost *C_{offset},* and the lateral velocity cost *C_{velocity}.* For details, reference may be made to Formula 5 hereinafter: ${C}_{{n}_{t}^{i} \to {n}_{t + {δ}_{t}}^{j}} = {C}_{obs} + {C}_{offset} + {C}_{velocity}$

In this formula, for a given trajectory, an obstacle cost *C_{obs}* corresponding to the trajectory is determined by a distance *d* from an obstacle boundary in an environment to the trajectory. For details, reference may be made to Formula 6 hereinafter: ${C}_{obs} = \left\{\begin{matrix}0 & d > {d}_{n} \\ {w}_{obs} {c}_{nudeg} \left(d-{d}_{c}\right) & {d}_{c} \leq d \leq {d}_{n} \\ ∞ & d < {d}_{c}\end{matrix}\right.$

In this formula, *dₙ* represents a maximum influence boundary of the obstacle, which is determined by features such as shape and state of the obstacle; *d_{c}* represents a collision boundary of the obstacle; *c_{nudeg}* represents a monotonically decreasing function; and *w_{obs}* represents a weight coefficient of the obstacle cost.

During traveling, the vehicle needs to travel along a road centerline as much as possible to prevent interfering with vehicles in other lanes. A degree to which the vehicle deviates from the centerline of the current lane is reflected by the reference line deviation cost *C_{offset}.* For the reference line deviation cost *C_{offset},* reference may be made to Formula 7 hereinafter: ${C}_{offset} = {w}_{offset} \left|{l}_{t}^{i}\right|$

In this formula, ${l}_{t}^{i}$ represents an *l* axis coordinate of the *i*^{th} sampled point ${n}_{t}^{i}$ in the time layer *Lₜ;* and *w_{offset}* represents a weight coefficient of a lateral deviation cost.

The greater the lateral velocity cost is, the greater a displacement of a connection line between two adjacent time layers of the vehicle in a direction of an 1-axis is, which causes the vehicle to have a greater lateral velocity when tracking the trajectory, thereby decreasing driving comfort of the vehicle. An expression of the lateral velocity cost *C_{velocity}* is shown in Formula 8 hereinafter: ${C}_{velocity} = {w}_{velocity} \left({l}_{t + {δ}_{t}}^{j}-{l}_{t}^{i}\right)$

In this formula, ${l}_{t + {δ}_{t}}^{j}$ represents an *l* axis coordinate of the *j*^{th} sampled point ${n}_{t + {δ}_{t}}^{j}$ in the time layer *L_{t+δt};* for lane keeping, *w_{velocity}* represents a lateral velocity cost weight; and for lane changing, in order to make lateral lane changing of the vehicle smoother, *w_{velocity}* represents a lateral velocity coefficient. For *w_{velocity},* reference may be made to Formula 9 hereinafter: ${w}_{velocity} = exp \left({l}_{t}^{i}-{l}_{lane}\right)$

In this formula, *lₗₐₙₑ* represents a lateral distance between a lane boundary line that the vehicle needs to cross and the reference line.

The method according to the embodiments of the present disclosure forms a trajectory set by connecting adjacent sampled points, and performs evaluation and selection based on multi-dimensional costs (obstacle/deviation/lateral velocity), ensuring that the optimal coarse-grained trajectory achieves a balance in three dimensions: obstacle avoidance safety, road compliance (close to the reference line), and ride comfort (stable lateral velocity). Application of a dynamic programming method may efficiently search for a global optimal solution, which, compared to a greedy algorithm, reduces local sub-optimal trajectories (such as being excessively close to an obstacle or deviating too much), such that a high-quality fundamental framework is provided for subsequent generation of the fine-grained trajectory.

In some embodiments, selecting the optimal coarse-grained trajectory from the set of coarse-grained trajectories by adopting a dynamic programming method includes three steps: cost design, archiving iterative calculation, and archive lookup iterative calculation.

In step (S421), the searched optimal coarse-grained trajectory is constituted by a linear connection sequence of respective adjacent time layers in a node network, and the sequence satisfies a condition as shown in Formula 10 hereinafter: ${argmin}_{\left\{{n}_{t}^{i}\to {n}_{t + {δ}_{t}}^{j}\right\}} {\sum }_{t = {t}_{0}}^{{t}_{max} - {δ}_{t}} {C}_{{n}_{t}^{i} \to {n}_{t + {δ}_{t}}^{j}}$

In this formula, ${C}_{{n}_{t}^{i} \to {n}_{t + {δ}_{t}}^{j}}$ represents a total cost of a path segment connecting the time layer *Lₜ* and the time layer ${L}_{t + {δ}_{t}}$*.*

Step (S422) archiving iterative calculation: starting from a second time layer, for each sampled point ${n}_{t}^{i}$ in each time layer *Lₜ,* an archiving content sequence formed by the sampled point ${n}_{t}^{i}$ and all sampled points in a previous time layer ${L}_{t - {δ}_{t}}$ is calculated using Bellman's principle of optimality, and archiving content with a minimum cost stored therein is selected as the archiving content of the sampled point. For a first time layer, sampled points therein are initial state points of the vehicle, and their archiving content is set to $\left[h=0,{C}_{0}^{1}=0\right]$*.* Reference may be made to Formula 11 hereinafter: $\left\{\begin{matrix}{J}_{t}^{i} = \left[h, {C}_{t}^{i}\right] \\ {C}_{t}^{i} = min \left({C}_{t - {δ}_{t}}^{h}+{C}_{{n}_{t - {δ}_{t}}^{h} \to {n}_{t}^{i}}\right) , h ∈ H\end{matrix}\right.$

In this formula, hrepresents an index of a sampled point in the previous time layer ${L}_{{t}_{- {δ}_{t}}}$*, H* represents an index set of all sampled points in the time layer ${L}_{{t}_{- {δ}_{t}}} , {C}_{t - {δ}_{t}}^{h}$ represents a cost value stored in the archiving content of a sampled point indexed as *h* in the time layer ${L}_{t - {δ}_{t}}$*,* and ${C}_{{n}_{t - {δ}_{t}}^{h} \to {n}_{t}^{i}}$ represents a cost value of a trajectory segment from the sampled point to a sampled point indexed as *i* in the time layer *Lt.*

Step (S423) archive lookup iterative calculation: starting from a last time layer, a sampled point *nₜₘₐₓ* with the minimum cost is selected using the cost corresponding to each sampled point obtained by archiving, and for lane-changing trajectory selection, is directly selected. Using the index *k*of the sampled point of the previous time layer in the archiving content, sampled points of each layer are iteratively looked up sequentially down to the first layer, such that an entire sequence of trajectory points, that is, the optimal coarse-grained trajectory, can be determined.

In step (S43), the optimal coarse-grained trajectory in an *SLT* sampling space plane corresponding to each acceleration sampled point *aₛ* may be obtained in step (S42). A cost function is designed, introducing an ideal velocity deviation cost, to filter out the optimal coarse-grained trajectory among different sampled accelerations and lane-changing operations. For the cost function, reference may be made to Formula 12 hereinafter: ${C}_{a} = {w}_{traj} {\sum }_{t = {t}_{0}}^{{t}_{max} - {δ}_{t}} {C}_{{n}_{t}^{i} \to {n}_{t + {δ}_{t}}^{j}} + {w}_{desire} \left|{v}_{{t}_{max}}-{v}_{desire}\right|$

In this formula, *vₜₘₐₓ* represents a velocity at a trajectory termination moment, *v_{desire}* represents an ideal velocity of the vehicle, and *wₜᵣₐⱼ, w_{desire}* represents a weight coefficient.

In step (S5), the 3D convex space is obtained by expanding the convex space in longitudinal and lateral directions starting from points of the optimal coarse-grained trajectory until a drivable boundary is reached; wherein the drivable boundary includes a longitudinal drivable boundary and a lateral drivable boundary, wherein the longitudinal drivable boundary is determined based on a preceding sampled acceleration and a succeeding sampled acceleration relative to the optimal coarse-grained trajectory, and the lateral drivable boundary is determined based on an allowable maximum lateral offset of the optimal coarse-grained trajectory.

During expansion of the convex space, the state information of the dynamic and static obstacles is considered. The static obstacles mainly include the road geometric information, guardrails or trees at the road boundaries, and the like, which are regions prohibited for vehicle driving over an entire time axis span in the spatio-temporal joint map. The dynamic obstacles mainly refer to predicted driving trajectories of surrounding vehicles, and the like, and regions occupied by these obstacles in the spatio-temporal joint map change over time. A specific process of determining the 3D convex space is as follows:

The convex space is expanded in the longitudinal and lateral directions starting from the points of the optimal coarse-grained trajectory obtained in step (S4) until the drivable boundary is reached.

For the longitudinal drivable boundary, when a preceding sampled acceleration trajectory and a succeeding sampled acceleration trajectory of the optimal coarse-grained trajectory exist, it indicates that longitudinal coarse-grained trajectories of the vehicle are all safe within an acceleration sampling interval [*a_{lowbound}, a_{upbound}*] , and a longitudinal reachable region formed by the acceleration sampling interval is a longitudinal boundary of the convex space.

For the lateral drivable boundary, a main factor considered is an allowable lateral displacement. Similar to acquisition of the longitudinal drivable boundary, expansion of the lateral drivable boundary also takes the coarse-grained trajectory of each time layer as a starting point, and the lateral drivable boundary expands in positive and negative directions of an L-axis. When a boundary risk value of an expansion region reaches the maximum lateral offset *Δlₘₐₓ*, the expansion ends, and a lateral convex plane of a current time layer is obtained.

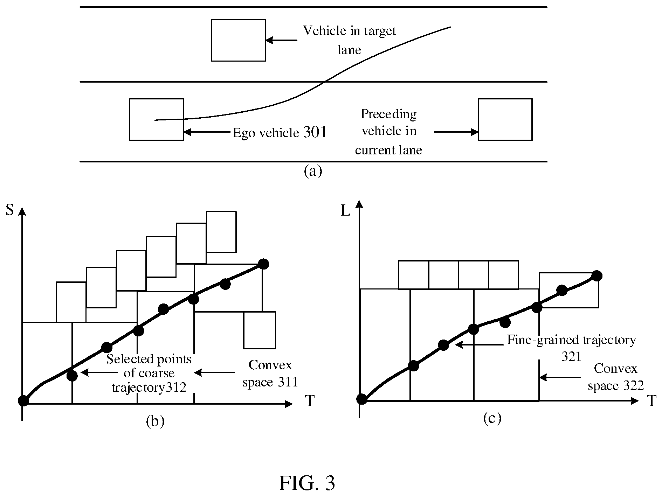

As illustrated in FIG. 3, a process of generating a 3D convex space based on an optimal coarse-grained trajectory is intuitively illustrated.

Subfigure (a) presents a spatial relationship of a vehicle lane-changing scenario, and intuitively illustrates initial environmental constraints of trajectory planning: a road is represented by parallel horizontal lines indicating lanes, and an ego vehicle 301 is a current planning subject. A "preceding vehicle in current lane" and a "vehicle in target lane" are dynamic obstacles, which constitute constraint conditions for lane-changing decisions; and a curve represents an intended path of a planned trajectory, reflecting a macroscopic trend of changing from a current lane to a target lane, specifying that a core task to be solved by trajectory planning is "obstacle avoidance + cross-lane connection," thereby providing a scenario basis for subsequent spatio-temporal sampling and convex space construction.

Subfigure (b) illustrates a construction logic of the coarse-grained trajectory and the convex space using a 3D spatio-temporal coordinate system (S: longitudinal distance, T: time, L: lateral offset). An S-axis extends along a longitudinal direction of the road, a T-axis represents a planning time sequence, and an L-axis reflects a lateral position, and grids assist in quantifying distribution of trajectory points. A convex space 311 is a safe and feasible region demarcated within each spatio-temporal slice (fixed T) by combining vehicle dynamics (acceleration and velocity constraints) and obstacle distribution, ensuring that the trajectory points not only satisfy physical limits but also avoid obstacles. Selected points of coarse trajectory 312, represented by a black polyline, form a coarse-grained trajectory screened out from sampled points within the convex space by cost function evaluation (obstacle avoidance, comfort, or the like), reflecting a process of "searching for a globally optimal path framework under spatio-temporal constraints," and providing a foundation for fine trajectory optimization.

Subfigure (c) focuses on adaptability verification between fine trajectory generation and the convex space, supplementing technical details of a coarse trajectory optimization stage: a fine-grained trajectory 321, represented by a black smooth curve, is generated based on a framework of the coarse trajectory through optimization means such as a Bézier curve, ensuring that the trajectory is continuous and smooth (conforming to vehicle acceleration and steering constraints); and the fine trajectory falls completely within a convex space 322, and as long as the generated trajectory satisfies boundaries of the convex space (dynamic obstacles, road boundaries, dynamic limits), collisions may be avoided, reflecting advantages of hierarchical planning characterized by "coarse space constraints + fine trajectory optimization," and finally outputting an executable high-precision driving trajectory.

The coarse trajectory points in FIG. 3 are discrete points of the optimal coarse-grained trajectory determined in step (S4). Taking these points as starting points, spatial expansion is performed in both a longitudinal direction (S-axis) and a lateral direction (L-axis): the longitudinal expansion is constrained by sampled accelerations of adjacent time layers to form a longitudinal drivable boundary (such as an "upper longitudinal boundary" and a "lower longitudinal boundary" in FIG. 3); and the lateral expansion is constrained by a maximum lateral offset to form a lateral drivable boundary. During the expansion process, if a boundary of a static obstacle (such as a road guardrail) or a dynamic obstacle (such as the current preceding vehicle, the target vehicle) is touched, the expansion stops, and a finally formed closed space is an SLT (longitudinal-lateral-time) 3D convex space. The fine-grained trajectory in the figure is located inside the convex space, verifying a convex hull property of the Bézier curve-by constraining the fine-grained trajectory within the convex space, it may be ensured that the trajectory avoids obstacles throughout an entire process and complies with vehicle dynamic constraints, such that safety and feasibility of the trajectory are ensured from a spatial level.

In the method according to the embodiments of the present disclosure, the 3D convex space is formed by longitudinal and lateral expansions starting from the points of the optimal coarse-grained trajectory as the starting points. A spatial range is strictly limited by the drivable boundaries (longitudinally based on acceleration constraints, laterally based on maximum offset), such that it is ensured that all trajectories within the convex space comply with vehicle dynamic characteristics and road environment constraints. This space not only provides a safe "container" (avoiding collisions) for generating the fine-grained trajectory, but also adapts to different scenarios by dynamic adjustment of expansion boundaries (e.g., shrinking the lateral range in curves). Compared with a fixed spatial range, invalid optimization regions may be reduced, thereby improving generation efficiency of the fine trajectory.

In step (S6), the Bézier fine-grained trajectory is determined according to an optimized trajectory model, with minimizing a cost of the trajectory as an objective, and subject to terminal constraints, continuity constraints, collision constraints, and dynamic constraints; wherein the optimized trajectory model is constructed using *n* Bézier curves, and the cost of the trajectory is determined by an integral of a square of a *jerk* value of the trajectory with respect to time.

In some embodiments, the optimized trajectory model constructed by the nBézier curves in dimensions σ ∈ {*s, l*} is provided with reference to Formula 13 hereinafter: ${f}^{σ} \left(t\right) = \left\{\begin{matrix}{α}_{1} ⋅ {\sum }_{i = 0}^{m} {p}_{i}^{1} ⋅ {b}_{m}^{i} \left(\frac{t - {t}_{0}}{{α}_{1}}\right) , & t ∈ \left[{t}_{0}, {t}_{1}\right] \\ {α}_{2} ⋅ {\sum }_{i = 0}^{m} {p}_{i}^{2} ⋅ {b}_{m}^{i} \left(\frac{t - {t}_{1}}{{α}_{2}}\right) , & t ∈ \left[{t}_{1}, {t}_{2}\right] \\ ⋮ & ⋮ \\ {α}_{n} ⋅ {\sum }_{i = 0}^{m} {p}_{i}^{n} ⋅ {b}_{m}^{i} \left(\frac{t - {t}_{n - 1}}{{α}_{n}}\right) , & t ∈ \left[{t}_{n - 1}, {t}_{n}\right]\end{matrix}\right.$

In this formula, ${p}_{i}^{j}$ represents an *i*^{th} control point of a *j*^{th} Bézier curve; *t*₀*, t*₁*, ... , tₙ* are time-dimension coordinates of a start point and an end point of each segment of the Bézier curve, and *αⱼ* represents an asynchronous time domain scaling factor.

For ensuring passenger comfort such that acceleration changes of the vehicle during driving should not be too large, the integral of the square of the value *jerk* of the trajectory with respect to time is used as a cost function for optimization. A cost function *Jⱼ* of the *j*^{th} Bézier curve may be expressed as Formula 14 hereinafter: ${J}_{j} = {w}_{s} {\int }_{{t}_{j - 1}}^{{t}_{j}} {\left(\frac{{d}^{3} {f}^{s} \left(t\right)}{{dt}^{3}}\right)}^{2} dt + {w}_{l} {\int }_{{t}_{j - 1}}^{{t}_{j}} {\left(\frac{{d}^{3} {f}^{l} \left(t\right)}{{dt}^{3}}\right)}^{2} dt$

In this formula, *wₛ*and *wₗ* represent control weights for longitudinal and lateral directions respectively.

For smoothness and feasibility of the trajectory, the terminal constraints, the continuity constraints, the collision constraints, and the dynamic constraints are set for optimization of piecewise Bézier curves.

The terminal constraints are as follows: a start point state and an end point state of the trajectory are identical to a start point state $\left[{σ}_{{t}_{0}}^{\left(0\right)}, {σ}_{{t}_{0}}^{\left(1\right)}, {σ}_{{t}_{0}}^{\left(2\right)}\right]$ and an end point state $\left[{σ}_{{t}_{n}}^{\left(0\right)}, {σ}_{{t}_{n}}^{\left(1\right)}, {σ}_{{t}_{n}}^{\left(2\right)}\right]$ of the optimal coarse-grained trajectory, wherein *σ* ∈ {*s*, *l*}, ${σ}_{t}^{\left(k\right)}$ represents a *k*^{th}-order derivative of position coordinates at a moment *t.* The terminal constraints are applied to a start point of a first convex space and an end point of a last convex space. For details, reference may be made to Formula 15 hereinafter: $\begin{matrix}\frac{{d}^{k} {f}_{0}^{σ} \left({t}_{0}\right)}{{dt}^{k}} = {σ}_{{t}_{0}}^{\left(k\right)} \\ \frac{{d}^{k} {f}_{n}^{σ} \left({t}_{n}\right)}{{dt}^{k}} = {σ}_{{t}_{n}}^{\left(k\right)}\end{matrix}$

The continuity constraints are as follows: the *k*^{th}-order derivative of the obtained trajectory should be continuous at a connection point of each adjacent convex space. A continuity constraint between a *j*^{th} convex space and a *j* + 1^{th} convex space may be expressed as Formula 16 hereinafter: $\frac{{d}^{k} {f}_{j}^{σ} \left({t}_{j}\right)}{{dt}^{k}} = \frac{{d}^{k} {f}_{j + 1}^{σ} \left({t}_{j}\right)}{{dt}^{k}}$

The collision constraints and the dynamic constraints require the trajectory to be between an upper boundary and a lower boundary of the convex spaces, and constrain position, velocity, and acceleration of the trajectory, i.e., *k* = 0,1,2^{th}-order derivatives of the Bézier curves. Therefore, the collision constraints and the dynamic constraints may be expressed as Formula 17 hereinafter: ${β}_{j , -}^{σ , \left(k\right)} \leq \frac{{d}^{k} {f}_{j}^{σ} \left(t\right)}{{dt}^{k}} \leq {β}_{j , +}^{σ , \left(k\right)}$

In this formula, ${β}_{j , -}^{σ , \left(k\right)}$ and ${β}_{j , +}^{σ , \left(k\right)}$ respectively represent a *k*^{th}-order lower boundary and a *k*^{th}-order upper boundary of the *j*^{th} convex space.

For the above linear equality and inequality constraints, all the constraints together with the cost function can be transformed into a quadratic programming (QP) form, and the optimized trajectory model is rapidly solved using an existing object-oriented quadratic programming (OOQP) solver.

For a quadratic programming formula, reference may be made to Formula 18 hereinafter: $\begin{matrix}min \frac{1}{2} {x}^{T} Qx + {c}^{T} x subject to \\ Ax = b , d \leq Cx \leq f , l \leq x \leq u\end{matrix}$

In this formula, Q represents a symmetric positive semi-definite n×n matrix, *x* ∈ *Rⁿ* represents a variable vector, A and C represent matrices of dimensions *mₐ* × n and *m_{c}* × *n* respectively, and *b, d, f, l, u* represent vectors of appropriate dimensions.

When solving for the trajectory, taking control point parameters of the Bézier curves as optimization variables, the constraints and the optimization variables are transformed into corresponding matrices and vectors of the OOQP solver, and optimal control point parameters may be obtained by calling a solving command, and hence an optimal piecewise Bézier trajectory is obtained, which is the Bézier fine-grained trajectory.

The method according to the embodiments of the present disclosure adopts Bézier curves to construct the optimized model. The convex hull property thereof may ensure that the fine-grained trajectory completely falls within the 3D convex space, eliminating collision risks from a geometric level. By using an integral of a square of a trajectory jerk with respect to time as the cost function, a rate of change of acceleration may be minimized, significantly improving ride comfort. The combination of multiple constraint conditions (the terminal, continuity, collision, and dynamic constraints) ensures that while satisfying smoothness, the trajectory strictly follows vehicle physical limits and road rules, and the finally generated fine trajectory possesses safety, feasibility, and comfort simultaneously.

The method for spatio-temporal joint trajectory planning based on sparse sampling according to the embodiments of the present disclosure performs sparse sampling on the coarse-grained trajectory points for the ego vehicle based on the longitudinal acceleration, obtains the optional coarse-grained trajectory by searching for the sampled points using a dynamic programming method, constructs the S-L-T 3D convex space according to the spatio-temporal joint map, fully considers obstacles in complex configuration spaces and the dynamic constraints, and implements generation of the optimized Bézier fine-grained trajectory using the convex hull property of the Bézier curve, thereby improving computational efficiency and ensuring safety and feasibility of the trajectory.

The following are apparatus embodiments of the present disclosure. For details not described in detail in the apparatus embodiment, reference may be made to the foregoing method embodiments.

Some embodiments of the present disclosure provide an apparatus for spatio-temporal joint trajectory planning based on sparse sampling. The apparatus includes:
an acquiring module, configured to acquire state information of an ego vehicle and state information of dynamic and static obstacles around the ego vehicle; and
a trajectory planning module, configured to: obtain a spatio-temporal joint map based on the state information of the ego vehicle and surrounding environment information of the ego vehicle; obtain a set of coarse-grained trajectory points for the ego vehicle by sparsely sampling coarse-grained trajectory points for the ego vehicle based on a longitudinal acceleration in the state information of the ego vehicle and according to the spatio-temporal joint map; determine an optimal coarse-grained trajectory based on the set of coarse-grained trajectory points for the ego vehicle; determine a 3D convex space based on the optimal coarse-grained trajectory and the spatio-temporal joint map; and generate a Bézier fine-grained trajectory in the 3D convex space by using a convex hull property of a Bézier curve.

In summary, a control apparatus for an assisted driving system according to the embodiments of the present disclosure may solve the problems in the related art that there are safety risks and unstable operations when the assisted driving system is turned on in a hazard flasher mode, ensure the safety of the vehicle and the stability of the operation of the assisted driving system when the hazard flasher mode is turned on, balance safety and convenience, and simultaneously meet users' requirements for hazard flashers and intelligent driving.

Some embodiments of the present disclosure provide a control device. The control device includes: one or more processors and one or more memories, the one or more memories storing at least one program code, wherein the one or more processors are configured to load and execute the at least one program code to perform the method for spatio-temporal joint trajectory planning based on sparse sampling as described above.

Some embodiments of the present disclosure provide a computer-readable storage medium. The computer-readable storage medium stores at least one program code thereon, wherein the at least one program code, when loaded and executed by a processor, causes the processor to perform the method for spatio-temporal joint trajectory planning based on sparse sampling as described above.

Some embodiments of the present disclosure provide a computer program product. The computer program product includes computer program code, wherein the computer program code is stored in a computer-readable storage medium, and the computer program code, when read and executed by a processor of a control device, is caused to perform the method for spatio-temporal joint trajectory planning based on sparse sampling as described above.

Other embodiments of the present disclosure will be apparent to those skilled in the art from consideration of the specification and practice disclosed herein. The present disclosure is intended to cover any variations, uses, or adaptations of the present disclosure following the general principles thereof and including such departures from the present disclosure as coming within common knowledge or customary technical means in the art. The specification and examples be considered as exemplary only.

It may be appreciated that the present disclosure is not limited to the exact construction that has been described above and illustrated in the accompanying drawings, and that various modifications and changes may be made without departing from the scope thereof. The scope of the present disclosure is only defined by the appended claims.

## Claims

1. A method for spatio-temporal joint trajectory planning based on sparse sampling, performed by an electronic device, the method comprising:
acquiring state information of an ego vehicle and state information of dynamic and static obstacles around the ego vehicle;
obtaining a spatio-temporal joint map based on the state information of the ego vehicle and surrounding environment information of the ego vehicle;
obtaining a set of coarse-grained trajectory points for the ego vehicle by sparsely sampling coarse-grained trajectory points for the ego vehicle based on a longitudinal acceleration in the state information of the ego vehicle and according to the spatio-temporal joint map;
determining an optimal coarse-grained trajectory based on the set of coarse-grained trajectory points for the ego vehicle;
determining a three-dimensional (3D) convex space based on the optimal coarse-grained trajectory and the spatio-temporal joint map; and
generating a Bézier fine-grained trajectory in the 3D convex space by using a convex hull property of a Bézier curve.

2. The method according to claim 1, wherein the longitudinal acceleration of the ego vehicle is sampled, and longitudinal coarse-grained sampled trajectory points for the ego vehicle are obtained based on the sampled acceleration; and
the set of coarse-grained trajectory points for the ego vehicle is formed by sampling, according to the spatio-temporal joint map, trajectory points satisfying a lane-keeping condition and trajectory points satisfying a lane-changing requirement from the longitudinal coarse-grained sampled trajectory points for the ego vehicle.

3. The method according to claim 1 or 2, wherein the acceleration of the ego vehicle is sampled at a predetermined resolution within a predetermined acceleration interval.

4. The method according to any one of claims 1 to 3, wherein a set of coarse-grained trajectories is obtained by connecting different sample points between each two adjacent time layers in the set of coarse-grained trajectory points for the ego vehicle; and
a cost for each coarse-grained trajectory in the set of coarse-grained trajectories is calculated, and the coarse-grained trajectory with a minimum cost is selected as the optimal coarse-grained trajectory, wherein the cost of the each coarse-grained trajectory comprises an obstacle cost, a reference line deviation cost, and a lateral velocity cost.

5. The method according to any one of claims 1 to 4, wherein the 3D convex space is obtained by expanding the convex space in longitudinal and lateral directions starting from points of the optimal coarse-grained trajectory until a drivable boundary is reached; wherein the drivable boundary comprises a longitudinal drivable boundary and a lateral drivable boundary, wherein the longitudinal drivable boundary is determined based on a preceding sampled acceleration and a succeeding sampled acceleration relative to the optimal coarse-grained trajectory, and the lateral drivable boundary is determined based on an allowable maximum lateral offset of the optimal coarse-grained trajectory.

6. The method according to any one of claims 1 to 5, wherein the Bézier fine-grained trajectory is determined according to an optimized trajectory model, with minimizing a cost of the trajectory as an objective, and subject to terminal constraints, continuity constraints, collision constraints, and dynamic constraints; wherein the optimized trajectory model is constructed using nBézier curves, and the cost of the trajectory is determined by an integral of a square of a *jerk* value of the trajectory with respect to time.

7. An apparatus for spatio-temporal joint trajectory planning based on sparse sampling, comprising:
an acquiring module, configured to acquire state information of an ego vehicle and state information of dynamic and static obstacles around the ego vehicle; and
a trajectory planning module, configured to: obtain a spatio-temporal joint map based on the state information of the ego vehicle and surrounding environment information of the ego vehicle; obtain a set of coarse-grained trajectory points for the ego vehicle by sparsely sampling coarse-grained trajectory points for the ego vehicle based on a longitudinal acceleration in the state information of the ego vehicle and according to the spatio-temporal joint map; determine an optimal coarse-grained trajectory based on the set of coarse-grained trajectory points for the ego vehicle; determine a three-dimensional (3D) convex space based on the optimal coarse-grained trajectory and the spatio-temporal joint map; and generate a Bézier fine-grained trajectory in the 3D convex space by using a convex hull property of a Bézier curve.

8. A control device, comprising: one or more processors and one or more memories, the one or more memories storing at least one program code, wherein the one or more processors are configured to load and execute the at least one program code to perform the method for spatio-temporal joint trajectory planning based on sparse sampling as defined in any one of claims 1 to 6.

9. A computer-readable storage medium, storing at least one program code thereon, wherein the at least one program code, when loaded and executed by a processor, causes the processor to perform the method for spatio-temporal joint trajectory planning based on sparse sampling as defined in any one of claims 1 to 6.

10. A computer program product, comprising: computer program code, wherein the computer program code is stored in a computer-readable storage medium, and the computer program code, when read and executed by a processor of a control device, is caused to perform the method for spatio-temporal joint trajectory planning based on sparse sampling as defined in any one of claims 1 to 6.
